# EUROPEAN PATENT SPECIFICATION

(11) **EP 1 315 096 B1**
(45) Date of publication and mention of the grant of the patent: **18.07.2012**
(21) Application number: 01127768.8
(22) Date of filing: 21.11.2001
(51) Int. Cl.: G06F 17/30

(54) **Method and apparatus for retrieving relevant information**
Methode und Gerät zum Wiederauffinden von relevanten Informationen
Procédé et dispositif pour récupérer des informations importantes

(43) Date of publication of application: 28.05.2003
(73) Proprietor: Voegeli, Werner, 5330 Zurzach (CH)
(72) Inventor: Voegeli, Werner, 5330 Zurzach (CH)
(74) Representative: Jordan, Volker Otto Wilhelm

(56) References cited:
- EP-A- 0 750 266
- EP-A- 1 049 030
- US-A- 5 778 362
- US-A- 5 918 223
- BO-REN BAI ET AL: "Syllable-based Chinese text/spoken documents retrieval using text/speech queries" INTERNATIONAL JOURNAL OF PATTERN RECOGNITION AND ARTIFICIAL INTELLIGENCE, AUG. 2000, WORLD SCIENTIFIC, SINGAPORE, vol. 14, no. 5, pages 603-608, XP002209092 ISSN: 0218-0014

## Description

The present invention relates to a method for retrieving from a set of electronic documents those documents which are close in content to an electronic document used as an input document.

Nowadays, people are confronted with an ever growing amount of information. The amount of information produced a single day is so big that an individual even when reading 24 hours a day during his whole lifetime, it would be impossible to read what is produced on a single day.

It is clear that the information which is produced in such a massive amount has to be processed somehow electronically. The most conventional way of processing, storing, archiving and retrieving huge amounts of information are so-called databases.

Databases store individual pieces of information in some ordered manner which is called "indexing".

Indexing means that each piece of information is labelled with at least one tag, a tag being a kind of "meta" information which describes some aspects of the content of the piece of information which actually has been stored.

A very simple example is an address record which may comprise family name, given name, street, street number, ZIP code, and the name of a city. One index field then could for example be the family name which describes one aspect of the whole address record.

Assume that a lot of address records are stored, then each has one tag containing a family name, and those tags could then be ordered automatically and can be used for accessing the individual address records in a fast manner, as is well known in the art of database technology.

This method is very fast for accessing the individual address records (which are called datasets in database terminology), however, it has the disadvantage that only those pieces or types of information can be searched for retrieval for which an index has been built up. This means that accessing stored information through indices necessarily does not give the user a full picture or all aspects of the information which has been stored, because only those aspects for which an index has been built are open for a user to be used as search criteria.

A quite different approach is the storing and accessing of information by simulating a so-called associative memory. According to this approach each document of a set of documents is represented through a corresponding so-called "feature vector" which, in fact, is a bit string. Each bit of the bit string calls for the presence or the absence of a certain feature in the document which it represents.

Features can for example be the presence or absence of certain unigrams, digrams, trigrams, or the like.

Each document stored is then represented through a bit string in which each individual bit indicates whether a certain feature is present or absent in its corresponding document. Access to and retrieval of the thus stored documents is then carried out by inputting a query document. This query document then is also represented through a bit string which is generated according to the same rules as the bit strings which represent the document already stored, i.e. to generate a query feature vector.

After this has been carried out, a bit-wise logical operation is performed between the query bit string and the bit strings representing the documents already stored, e.g. a bit-wise logical AND between the query and each of the stored document vectors. Based on this bit-wise operation there is formed some kind of similarity measure between the input query bit string and the bit string representing a respective of the documents forming the database. Features which are present in the query and in the stored document give a logical '1' as a result of the AND operation, and the more features are present in query and the stored document the more logical '1's are resulting from the AND operation. As an example, the number of logical '1's can be regarded as a similarity measure between a query bitstring and the bitstring (feature vector) of a stored document. The (individual) similarity measures obtained in this way for the different documents of the set may be considered to be vector components of a similarity measure vector.

Based on the similarity measure vector which indicates the similarity between the query document and the individual documents stored in the database there can be retrieved the most similar document from the database which - with respect to the features coded in the bit string - is most close to the query document.

With such an associative access it becomes possible to input any arbitrary query into a database and to find those documents which are most similar to the input query document. One of the capabilities of such an associative search is that those documents which are regarded as "similar" based on an evaluation of the feature vectors actually are similar in their content to the input query. This means that such an associative search can perform a truly "associative" access which is very similar to what the human brain does.

E.g. if one reads a certain book about a certain topic then a human being automatically has a lot of associations, books come into his mind which relate to similar or the same topics, events and experiences come into his mind linked to these topics, and the like. Assume they are all represented through feature vectors in a database then one could perform query e.g. based on a book the user is reading at the moment, then such an electronic associative search would be capable of producing similar associations like the human brain, i.e. similar books, documents, and - if stored and coded - experiences or events would be retrieved.

Such an associative search method or "Associative Access Method (ASSA)" is for example known from Berkovich, S., EI-Qawasmeh, E., Lapir, G.: "Organization of near matching in bit attribute matrix applied to associative access methods in information retrieval", Proceedings of the 16th IASTED International Conference Applied Informatics, 23. - 25.02.1998, Garmisch-Partenkirchen, Germany.

Corresponding, but somewhat more detailed disclosure, is also known from Lapir, G. M.: "Use of associative access method for information retrieval systems" PROC. 23rd PITTSBURGH CONF. ON MODELING AND SIMULATION, 1992, pages 951 - 958, XP009099840.

Accordingly, a method for retrieving from a set of electronic documents those documents which are close in content to an electronic document used as an input document is known, which comprises:
- providing a set of documents;
- generating bit string feature vectors for the documents of said set, wherein each feature vector represents a respective of said documents and indicates with each of its binary vector components the presence or absence of a certain feature within the respective document;
- forming a bit attribute matrix from the bit string feature vectors, the bit attribute matrix consisting of individual bits and each bit representing a certain attribute for a certain document by indicating the presence or absence of a certain feature within the respective document;
- providing an input document;
- generating a query bit string feature vector representing the input document and indicating with each of its binary vector components the presence or absence of a certain feature within the input document;
- effecting an associative search for said input document using said bit attribute matrix and the query bit string feature vector representing the input document,
   wherein the associative search for said input document is effected by determining for said input document and each document of said set an individual similarity measure between said input document and the respective document of said set,
   wherein the respective individual similarity measure is determined by effecting a bit-wise logical operation between the query bit string feature vector representing the input document and the bit string representing the respective document in said bit attribute matrix, wherein said individual similarity measures, each being determined for the input document and one respective document of said set and representing a similarity between said input document and said one respective document of said set, are vector components of a similarity measure vector associated to the input document and all documents
   of said set of documents;
- judging, on basis of said individual similarity measures included as vector components in said similarity measure vector, which document of said set can be regarded as having a content close to said input document.

A further method for retrieving from a set of electronic documents those documents which are close in content to an electronic document used as an input document is known from the article BO-REN BAI ET AL: "Syllable-based Chinese text/spoken document retrieval using text/speech queries" INTERNATIONAL JOURNAL OF PATTERN RECOGITION AND ARTIFICAL INTELLIGENCE, AUG. 2000, WORLD SCIENTIFIC, SINGAPORE, vol. 14, no. 5, pages 603-616.

According to this approach non-binary feature vectors are used which contain presence information, frequency counts and acustic scores of syllables and adjacent syllable pairs in a syllable lattice. Such generated feature vectors are stored in a feature vector database. By text query or speech query an input document is provided to an online retrieval subsystem. A corresponding feature vector is generated for the input document on basis of the same syllable lattice. On basis of the feature vector database and the query feature vector a retrieving module effects an associative search within the feature vector database by evaluating similarity measures between the query feature vector and all document feature vectors of the database. A set of document with the highest similarity measures are selected as the retrieving output.

A method for data retrieval from a set of electronic documents on basis of "query vector" in the form of a list of item identifiers or attribute identifiers and their corresponding values, possibly relating to the content of an electronic document used as an input document, is know from US 5,778,362. A two-dimensional data matrix or "map" which is implemented as an "associative table", can be arranged as a document-by-term matrix and accordingly can be based on a set of documents which is provided. A respective cell entry in the matrix gives the frequency that a corresponding term occurs in the corresponding documents. Accordingly, the matrix rows correspond to feature vectors which are generated for the documents of the set.

US 5,778,362 further discloses the process of effecting an associative search within the feature vector database based on a query feature vector. The query feature vector could be based on an electronic document used as an input document, e.g. an e-mail message or a document to be compared with other documents to identify other similarities.

EP 0 750 266 A1 discloses the use of characteristic vectors (feature vectors) of documents and input documents. By using conceptual identifiers which are independent from a language used, conceptual feature vectors are generated which relate to conceptual identifiers instead of language-based or phonetic-based identifiers.

The use of feature vectors for classifying and ranking the similarity between individual audio files is disclosed in US 5,918,223. The feature vectors relate to features which describe the features of the sound of the respective audio file such as pitch, brightness and rhythm.

The use of feature vectors representing features of respective documents is also known form EP 1 049 030 A1. The vector components of a vector representing a certain document correspond to the frequency of the occurrence of terms in said document. A classification scheme relates to the separation between respective feature vectors in a vector space formed by the n dimensions of the feature vectors, with subspaces in this vector space corresponding to a certain document class.

Referring again to the above-mentioned first two prior art citations, there can be a problem that the resolution of the conventionally known associative search is limited, since features to which the query feature vector and the document feature vectors relate, give no useful information but only a lot of "noise". This can in particular be the case when the dimension of the feature vectors is relatively high and the documents of the set as well as the input document contain many different aspects and lots of text. For example, when those documents, in particular the input document, are/is very long, many of the features on which the binary feature coding is based can often be found somewhere in the text, so that the setting of the respective bit in the respective feature vector will be no good basis for the associative search for finding similar documents.

To increase the resolution of the associative search or to avoid a deterioration of the associative search resolution the invention provides the method defined in claim 1.

According to the invention the input query document not only is split up into fragments, but the individual fragments then are shifted by a given number of units based on which the query document is composed. This use of a so-called sliding window then generates further fragments which can be used as input for the associative search. These further inputs again give further similarity measures which are also taken into account when combining them to a final similarity measure.

The invention is based on the understanding that such document fragments obtained on basis of the input document are generally rather focused with respect to the subject or aspect dealt with, and accordingly focused with respect to features represented by respective vector components of the query feature vectors generated for the fragments.

Accordingly, the similarity measures obtained for the fragments of the input document with respect to all documents of the set will allow a better judgment which documents of the set can be regarded as having a content close to the input document, so that the individual final similarity measures included as vector components in the final similarity measure vector can have a better resolution.

Further, advantages and improvements can be obtained by the teachings given in the subclaims.

According to a particular embodiment the query and the documents of the set of stored documents represent texts spoken by a human voice.

According to a further particular embodiment the associative search can be used to classify the input query document as belonging to one of a plurality of predefined classes. For that purpose, the documents of the set are respectively classified as belonging to one of a plurality of classes, then the associative search is performed as the hit in the individual classes are counted. The class from which the most hits have been retrieved, is then the class to which the input query document is assigned.

According to a further particular embodiment a self optimizing method is used for optimizing the parameters of the associative search. For that purpose, there is used an ideal database with two or more classes which contain no mis-classifications. The classification method according to an embodiment of the invention is then used to try to reproduce this ideal classification by automatically classifying all the documents contained in the database. This process is carried out repeatedly while varying systematically the parameters of the process. Those methods which do not give good results and for which the parameters apparently are not optimized are not further pursued, however, those variations of parameters which are successful are further pursued. Finally, there is achieved an optimized set of parameters which reproduces the ideal database in an optimum manner through automatic classification.

### Detailed Description

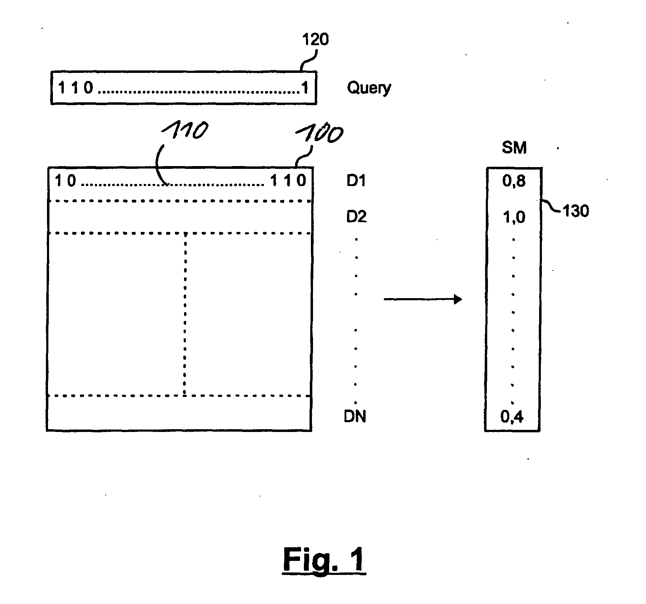

An associative search by simulating an associative memory is, in principle, now explained in connection with Fig. 1. For the associative search a set of documents D1 to DN are stored. Each of these documents is represented through a corresponding feature vector 110 which is a sequence of a predetermined number of bits. Each of these bits represents or indicates the presence or the absence of a certain feature in document which it represents. Such a feature may e.g. be a trigram and the feature vector may then have a length in accordance with the possible number of trigrams. Of course, the representation of other features is also possible.

As already mentioned, each document is represented through a corresponding feature vector 110. These feature vectors together form a feature vector matrix 100 which also can be called bit attribute matrix because it consists of individual bits and each bit represents a certain attribute for a certain document.

In an analogous manner not only the documents are represented, but also the query document can be represented through a bit string 120 which is formed according to the same rules which are valid for the formation of the bit attribute matrix. According to a prior art approach one such query bit string is generated to represent the query document. The query bit string 120 then is combined with bit attribute matrix 100 by performing bit-wise logical operations in such a manner that for each of the documents D1 to DN there is obtained a similarity measure which is then stored in a similarity measure vector 130. The most simple way to calculate the similarity measure is to perform a logical AND operation between the query bit string and each of the rows in the matrix 100. This then gives for each row in the matrix 100 a corresponding result row which has a certain number of logical "1". The higher the number of logical "1" is, the larger is the similarity between the query bit string and a certain feature vector. Based on that the similarity measure can be calculated. Other, more sophisticated ways of calculating the similarity measure can also be imagined, e.g. in addition to only conducting the bit operation it is also possible to take into account the actual contents of the documents D1 to DN, phonetic similarities between the query bit string and the respective documents. Those phonetic similarities can then also be taken into account when calculating the final similarity measure.

According to the invention, not only one query bit string representing the whole query document but several query bit strings are generated, each representing a respective fragment of the query document, as explained in the following.

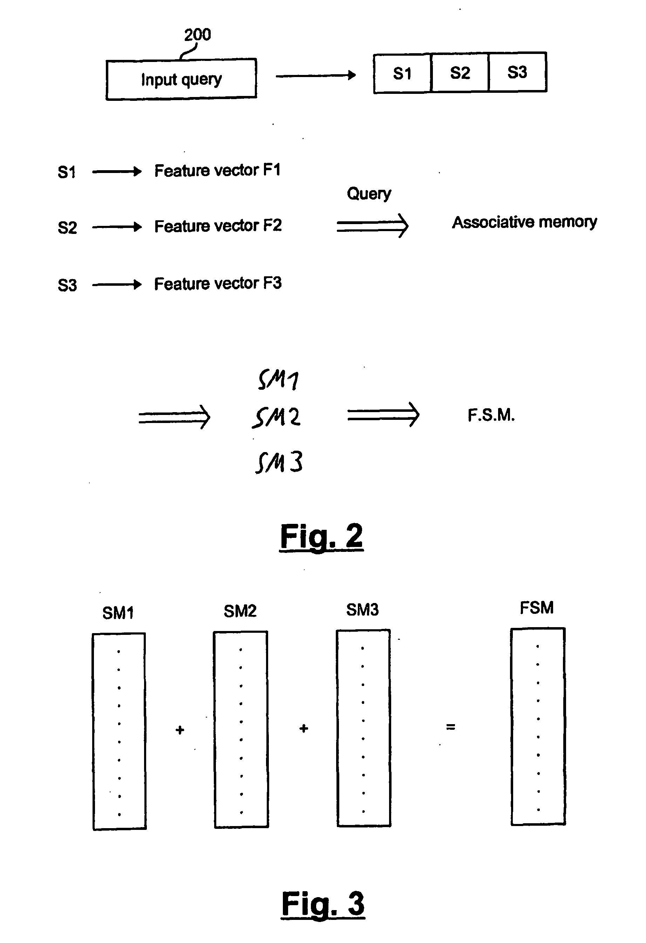

Fig. 2 explains how an input query can be processed in order to obtained a more efficient associative access or associative search. Input query 200 is at first split up into fragments S1, S2, and S3 of a given size. The size of the fragments is a parameter which can either be predefined or it can be selected by the user or it can be automatically set using an optimizing method which is used to find an optimized set of parameters. The splitting up is based on units of elements based on which the query document is comprised, such as e.g. based on words. The input query document may e.g. comprise 15 words, and the given size of the fragment may be five, then segments S1, S2, and S3 are each five words long. If the query would only comprise 14 words, then the last fragment S3 would contain only four words.

The individual segments S1 to S3 are then converted into corresponding feature vectors F1 to F3, as indicated in Fig. 2. Then for each of them an associative query is performed such as the one explained in connection with Fig. 1.

Since there are three input query vectors, accordingly there are also three similarity measure vectors or similarity vectors which are outputted from the query. The vector components of the similarity vectors represent the similarity between the input query, here the respective fragment for which the respective input query vector was coded, and a respective individual document of the stored set. Each of the similarity measure vectors SM1 - SM3 represents one aspect of similarity between the input query document, from which the fragments are obtained, and the set of documents being stored by a respective bit string for the associative search.

According to the invention, additional input query vectors are to be obtained by generating additional fragments using a so-called "shifting", which is explained below.

Based on the individual similarity measure vectors SM1 to SM3 there is then calculated a final similarity measure vector FSM as shown in Fig. 3. Fig. 3 schematically illustrates the vector addition of the individual similarity measure vectors SM1 to SM3.

It should be noted here that the operation to obtain the final similarity measure vector FSM may also comprise a weighting in accordance with a certain weighting function. For example, those vector components of the similarity measure vectors SM1 to SM3 which indicate a higher similarity may be weighted higher than those which have a lower similarity (e.g. below 50%). This gives a higher weight to those documents of the stored set for which actually a similarity has been found and in order to decrease the weight of those documents for which the similarity actually is only a kind of "noise".

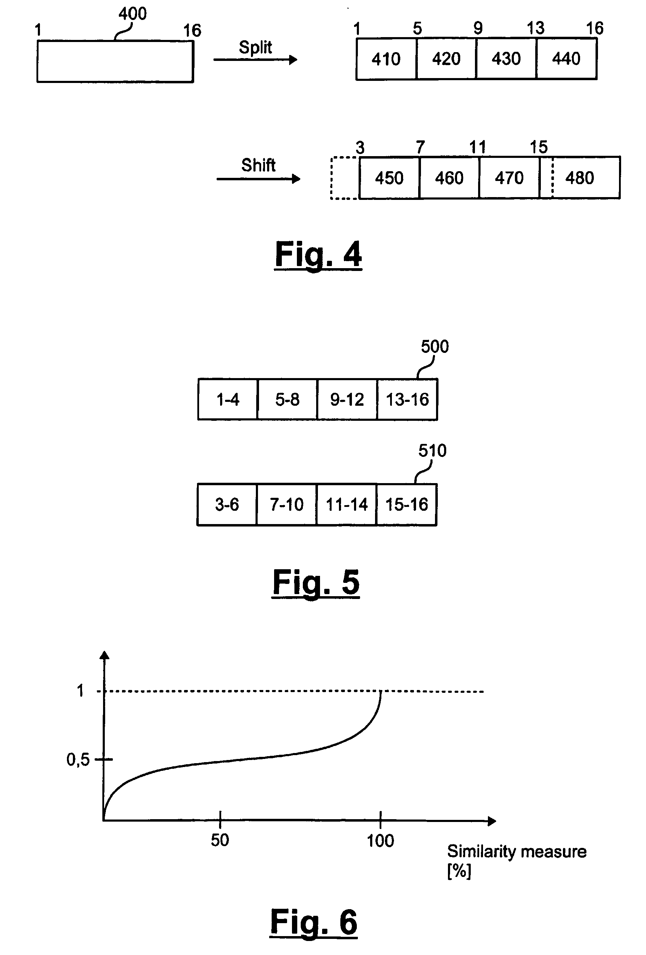

An embodiment of the invention is now explained in connection with Fig. 4. Assume that an input query document is 16 words long. Assume further that the fragment size is four words, then the input query 400 is split up into four blocks 410 to 440 as shown in Fig. 4, each block having four words.

In addition to those four input fragments which are generated by splitting up the input query, further fragments are generated by a shift process (sliding window)as it is also illustrated in Fig. 4. Such a shift means that the boundaries of the block generated through splitting up the input query are shifted by a certain amount of elements, here by two words. This results in four fragment blocks 450 to 480 as illustrated in Fig. 4, where the boundaries of the individual blocks are shifted when compared to the original four blocks.

This is further illustrated in Fig. 5, where the individual blocks and the number of words contained therein are schematically shown. The splitting up into fragments generates four blocks 500, each containing four words, and the shifting generates additional four blocks, whereas the last block in these four blocks 510 only contains two words, namely word 15 and 16 of the original input query. As a consequence, through splitting and shifting there are generated in total eight fragments of the input query which then can be used as input for an associative search as explained before. Consequently, there are then not only three similarity measure vectors as in Fig. 2, but rather there will be up to eight similarity measure vectors. Based on these eight similarity measure vectors a final similarity measure vector will be calculated in an analogous manner as explained in connection with Fig. 3.

Based on the final similarity measures thus obtained as vector components of the final similarity measure vector the retrieval is performed. For each component in the final similarity measure vector FSM there is a corresponding stored document in the set, and depending on the criteria set there will be retrieved either the most relevant document only, or there will be retrieved those documents whose similarity measure lies beyond a certain threshold value, or there will be retrieved the 10 most relevant documents or the like. That kind of retrieval criteria can be changed depending on the desire of the user, there will be retrieved as an output, no, one or more documents.

Because the retrieval has been made by judging the similarity between the input query document and the documents stored for associative access, the output can be such that it is similar to the input query with respect to the feature vectors.

Since the feature vectors, or in other words, the features themselves represent the actual content of the input query as well as of the documents of the set, there is not only a similarity in those features but actually also a similarity in content between those retrieved documents for which there is a high similarity measure. This means that with the method explained hereinbefore, a user can generate or apply an arbitrary input query which defines the field of interest for which the user wants to carry out some "associations", and the associative search will actually carry out such associations by delivering those documents which are similar in content to the input query document.

Splitting up the input query document in some sense "increases the resolution" of the associative memory access. Moreover, since the associative memory access performs "true associations" in some sense, it is advantageous if the input query is focused on a certain subject or a certain aspect of a topic rather than containing many different aspects and lots of text. This is achieved by splitting up the input query into individual fragments. Those fragments are rather focused, and they give quite a good and focused picture of the similarity between the documents represented by bit string feature vectors in the bit attribute matrix for the associative access and the individual fragments rather than delivering an unfocussed similarity measure which contains a lot of "noise", in case of the input query being very long.

In order to avoid that the noise is then again further introduced when calculating the final similarity measure vector the final similarity measure vector is calculated by using some weighting function which gives more weight to those documents for which a higher similarity value has been measured than for those documents for which a lower similarity value has been measured. An example for such a weighting function is schematically illustrated in Fig. 6. As can be seen from Fig. 6, those documents for which the similarity measure is above 50% are assigned a higher weight, and those for which the similarity measure is below 50%, are assigned a lower weight. Close to 100% and close to 0% the weighting function is rather steep in order to give a high weight to those input query fragments for which the corresponding similarity measure for the respective documents has been calculated as being relatively high. When calculating the final similarity measure as illustrated in Fig. 3, the weighting function is taken into account in such a manner that for each of the components of the individual similarity measure vectors SM1 to SM3 the weighting value is taken from the weight function shown in Fig. 6, and the vector component is multiplied with the corresponding weight value. Thereby a higher weight can be assigned to higher similarity measure values when calculating the final similarity measure vector FSM.

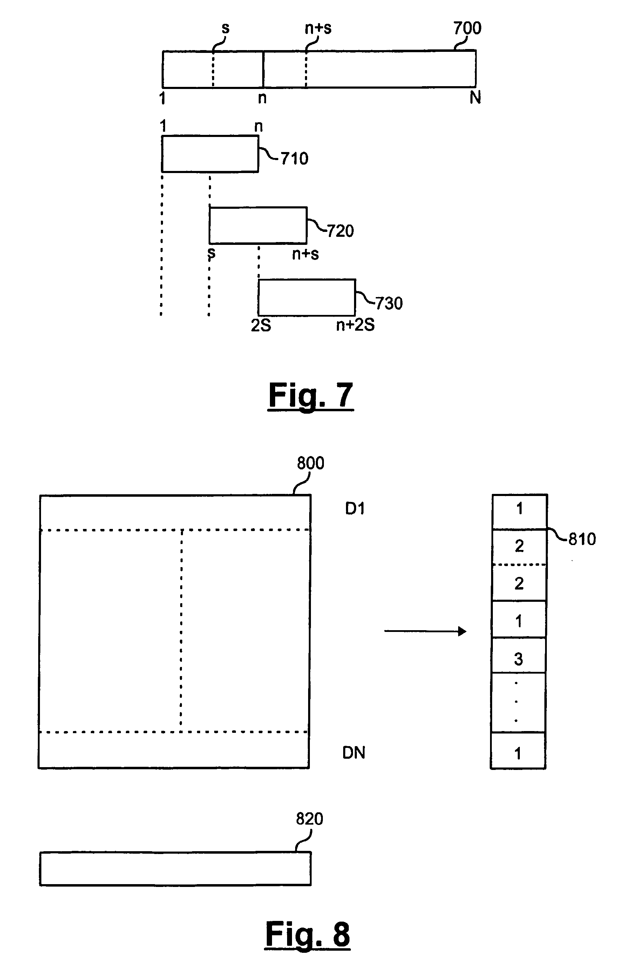

The effect which is achieved by splitting up the query into fragments and shifting the fragments, as explained before, can also be achieved in a similar manner by a method representing an embodiment of the invention as explained hereinbelow. Fig. 7 shows a query input feature vector 700 which has N individual elements, here words. Based on a fragment size n which is either predefined or selected or inputted by a user, a first fragment 710 is generated. Then, according to a further parameter which may be called a shift parameter s further fragments are generated in the following manner. A first fragment is generated by starting from word number s and extending to word number n+s. This fragment is shown as fragment 720 in Fig. 7. A further fragment is then generated by starting at word number 2s and is extending to word number n+2s, thereby maintaining a fragment size of n.

In this manner multiple fragments are generated by shifting the starting word for each fragment by s words to the right side of the query input document 700. This results in a plurality of fragments of the query input, and for each of these fragments there is then generated a corresponding feature vector which is used as a query input for the associative search.

What the embodiments described so far have in common is that they all use multiple fragments generated based on an input query document, and based on those multiple fragments there are generated multiple query feature vectors which can be used to effect the associative search. The individual parameters such as the size of the individual fragments or the value or number by which the individual fragments overlap, such as the value s in Fig. 7, can either be predefined according to a suitable set of parameters, they can be selected or chosen by the user, or they can be optimized through some procedure which derives the parameters and finds a set of values which gives an optimum result, as also already explained before.

According to a further embodiment not only the input query document is used for generating fragments, but also the documents stored in the associative memory are used to generate fragments in a manner similar to the fragmentization of the input query document. If such a measure is taken, then this results actually in multiple bit attribute matrices, which of course increases the computing power necessary to carry out an associative access. If such multiple bit attribute matrices have been generated by generating multiple fragments of the documents stored in the associative memory and calculating corresponding feature vectors, then the input query fragments are applied as queries for all of the bit attribute matrices, thereby increasing the number of similarity measures obtained. Whether such an approach is feasible in terms of computing power may depend on the computer used as well as on the number of documents which actually have to be stored and represented.

With respect to the shifting of the individual fragments in order to have overlapping fragments as explained in connection with Fig. 7, such a shifting can be carried out based on any of the units based on which the query document actually is composed. Such a unit may for example be a word, then this would mean that in case of Fig. 7 as explained already the first fragment contains n words, the second fragment starts with the s-th word and extends to the (n+s)-th word, and so on. Another unit could also be a syllable rather than a word, or even a character. Any unit can be used which is a unit based on which the query document is composed. However, since the process of accessing the simulated associative memory is about obtaining associations which somehow make sense in terms of their informational content, it seems to be reasonable that the elements used for generating the fragments and for generating overlapping fragments should be elements which themselves contain some kind of meaning or at least some information in themselves, such as words or at least syllabes. Another such unit could be a phoneme, this will be explained in more detail in connection with a further embodiment.

Now there will be explained in connection with Fig. 8 an embodiment of the present invention which can be used for classifying an input query document as to which of a plurality of classification classes it belongs. In Fig. 8 there is shown the bit attribute matrix 800 representing a number N documents D₁ to Dₙ by respective bit string feature vectors. Each of these documents is classified as belonging to one of three classification classes. For example, the documents D₁ to Dₙ can be articles, and they are classified as either being scientific articles (class 1), press articles (class 2), or other articles (class 3). Vector 810 shown in Fig. 8 contains the label which assigns a classification class to each of the documents D₁ to Dₙ.

Let us now assume that the total number of documents N is much larger than 3, so that each of the classification classes contains a comparatively large number of documents. Let us now further assume that an input query document 820 is used as an input query for the associative search. A user may now be interested not only in retrieving those documents among D₁ to Dₙ which are most similar to query 820, but he may also be interested in classifying whether query document 820 belongs to either class 1, class 2, or class 3.

Let us now assume that the query is carried out for a plurality of fragments, and let us further assume that the retrieval criterion is that such that all documents for which the similarity measure is above a certain threshold are retrieved. If the similarity threshold is set such that a plurality of retrieval results are obtained, then there will be a plurality of hits (retrieved documents) for each of the different classes 1, 2, or 3. However, based on the assumption that documents which belong to a certain class are somehow self-similar, there will be a significantly larger number of documents retrieved from the class into which query document 820 actually also belongs.

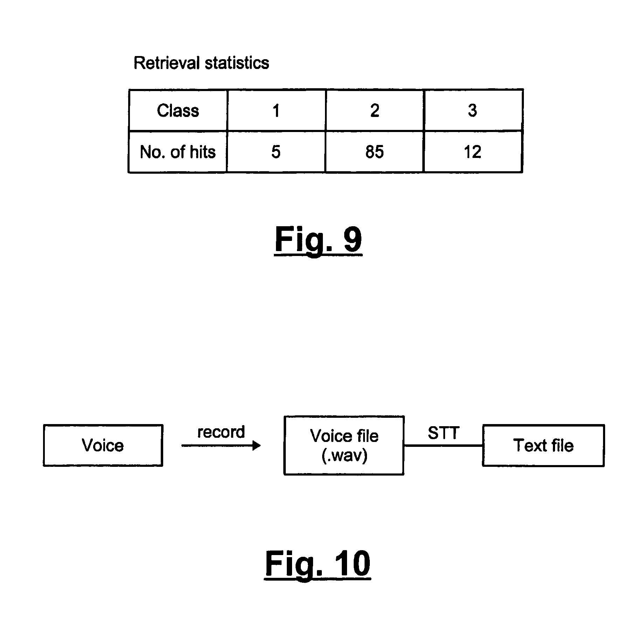

Fig. 9 illustrates the retrieval statistics which may be obtained when performing a query based on an input query document onto a set of stored documents, i.e. documents represented by a respective bit string feature vector in the bit attribute matrix, which belong to one of three classes. In the example shown in Fig. 9 there are 85 hits which belong to class 2, this means that the input query document most likely also belongs to this class. A "hit" here means that a query result fulfills a certain criterion such as a confidentiality measure which is above a certain treshold so that it can be regarded as a "hit". The particular criterion and the treshold value may be selected depending on the circumstances.

Based on such a hit count statistics it can be judged to which class of a set of classes an input document belongs, and an automatic classification can be carried out. This automatic classification will be the better the more accurate the original classification already is. If classification vector 810 of Fig. 8 already contains some misclassifications, then also the retrieval statistics of Fig. 9 will contain corresponding errors. However, if the original classification is very good, then the likelihood is also relatively high that the retrieval statistics is a good base for classifying an unknown and unclassified query document.

In this connection, it should also be noted that the set of documents for which the original classification is very good is most suitable as a starting set for finding an optimized set of parameters such as the fragmentation size and the shift or overlap value explained in connection with Fig. 7. Let us assume that a very good classification and a corresponding set of already classified documents is used, then for each of the documents in this set an automatic classification is performed as explained before. Since the original classification is already good or in an ideal case already perfect, the retrieval statistics of Fig. 9 should always give the correct value in the sense that the resulting classification should also be correct. If this is not the case, then possibly something is wrong with the parameters, and the parameters should be varied. With the varied parameters then again a new run can be performed based on the original data set, and it can be checked whether the classification with the new parameters will now give a better result. With such a method in an optimized manner an ideal or optimum set of parameters can be found.

So far no attention has been paid to the kind of input documents used as the query document for querying the simulated associative memory. In principle, any kind of input document can be used, and any kind of document can be represented by a feature vector for the associative search. However, hereinafter there will be explained a particular embodiment where the input query document as well as the documents represented for the associative access are voice documents.

Let us assume that the set of documents to be represented for the associative search are files which represent some texts spoken by a human voice. Those texts may for example be radio speeches, television speeches, interviews, telephone conversations, or the like. Those voice documents may be converted into text documents according to a conventional speech-to-text method resulting then in a corresponding text file. Possibly, before the speech-to-text conversion a recording of the voice could have been performed which records the voice in some sound file, such as a wav-file. This is schematically illustrated in Fig. 10.

There can then for example be many of such text files which are resulting from some human voice, and those text files could then be stored as documents in a simulated associative memory through their corresponding feature vectors. For that purpose, each of the text files is converted into its corresponding feature vector, and the thus resulting set of feature vectors is arranged into a matrix to obtain the bit attribute matrix as already explained in connection with Fig. 1.

It is then possible to also use some text spoken by a human voice as a query input. For that purpose, similar to the process shown in Fig. 10 a text file representing the query is generated. Also this text file is represented into a corresponding feature vector, and then an associative memory access as already explained before can be obtained.

Using such a method, it becomes possible to retrieve from a sound archive those items which are similar in content to any given query sound. Let us for example assume that the documents represented for the associative access by a respective feature vector are news text, then it would be possible to speak a query text into a microphone, record it according to Fig. 10, transfer it into a text file, and retrieve from the simulated associative memory those text files and then the corresponding voice files which are most similar in content to the spoken query.

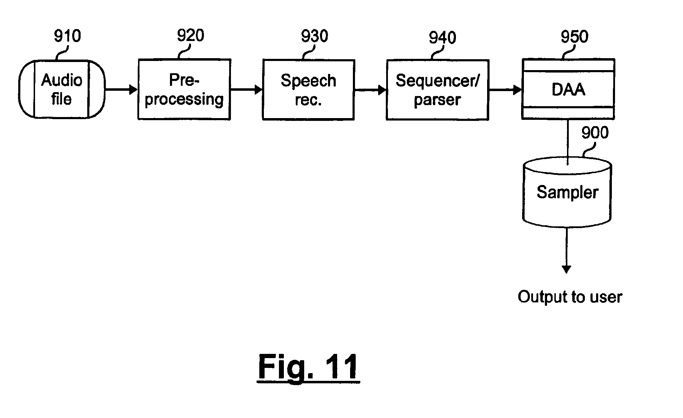

A further embodiment of the present invention will be now explained in detail in connection with Fig. 11. In a database 900 there are stored samples of audio files for allowing an associative access. For that purpose, the samples are converted into text files, the text files are converted into feature vectors, and the feature vectors are arranged in a bit attribute matrix as already explained.

An audio file 910, which may e.g. take the form of a wav-file, is then inputted into the system and acoustically preprocessed in step 920. The problem with acoustic files sometimes is that the dynamic range is too large, the level of noise is too high, etc. To improve the quality in the preprocessing step 920 the dynamic range is normalized, noise is filtered, etc. This assures that in the next step of speech recognition 930 the speech recognition engine is receiving an audio file which is most suitable for obtaining best results in the speech-to-text conversion process. Step 930 returns as an output a text into which the audio file has been converted.

In step 940 a sequencer/parser is then used to generate the fragments of the input text sample. This can be carried out according to any of the methods of generating fragments explained before. A result of the sequencer/parser is a plurality of text fragments of the text generated by speech recognition unit 930.

Based on this plurality of text fragments there is then carried out the direct associative access in step 950 for each of the fragments. This results then in a respective similarity measure for the samples stored by a respective feature vector in the memory database 900, and depending on the return criterion set there is output one or more samples having the highest similarity measure, or having a similarity measure above a certain threshold. Those outputted samples can then be considered as being most similar to the sample which has been inputted as an audio file in step 910.

According to a further embodiment, the method explained in connection with Fig. 11 can be even more refined by having two sets of samples, one set of samples 900 as shown in Fig. 11, and a further set of samples 905 which is not shown in Fig. 11. Let us now assume that the first set of samples 900 contains relevant samples in the sense that they are samples which can be classified as being interesting from the point of view of the user, and the other set of samples 905 contains voice samples or voice file samples which are not interesting from the point of view of the user. In such a case, the associative memory access can be combined with a retrieval statistics as explained in connection with Fig. 9. For a given input audio file 910 there will be a number of retrieved samples from set 900 an another number of hits in the set of samples 905. If the relevant set of samples 900 delivers the higher number of hits, then the inputted audio file can be assumed to be also of relevance to the user. However, if the number of hits in the non-relevant set of samples 905 is higher, then it can be assumed that the audio file in its content is not of particular interest to the user and needs not to be outputted together with the hits found. With such a method, classification and retrieval can be combined in order to check for an unknown input audio file whether it is relevant at all, and if it is relevant at all, to retrieve those already stored samples which are similar in content to the inputted audio file.

According to a further embodiment in speech recognition step 930 the conversion is not performed into a text file, but rather into a file the elements of which are phonemes coded in proper form, such as through ASCII character sequences. It should be noted here that speech recognition mostly contains two steps, at first a conversion of the audio files into phonemes (a recognition of the phonemes of the individual spoken words), and then a conversion from the recognized phonemes into the final words of the text. It occurs relatively often in speech recognition processing that phonemes are correctly recognized, however, that the final recognition of the individual words is not performed correctly. If speech recognition step 930 is limited to perform only the conversion into phonemes, and if the sample database 900 also stores the sample in the form of phonemes rather than in the form of text, then this source of error can be avoided and a more accurate processing can be expected.

As will become apparent from the foregoing explanation, the system explained in connection with Fig. 11 can be used for two purposes. At first, in case the user has a certain imagination of which content he wants the association to have, or in other words, if he already knows what kind of content the documents which shall be retrieved should have, a user may just compose an input audio file by speaking a certain text which he considers as interesting or relevant. The process shown in Fig. 11 will then retrieve as output those documents from the stored samples which are most similar in their content to the inputted audio file generated by the user.

Another application could be that the content and the relevance of audio file 910 itself is not yet known. By performing a direct associative access as explained in connection with the two samples 900 and 905, it can at first then be checked whether the audio file is relevant from the user's point of view at all by checking whether its classification would classify it as either relevant or non-relevant, in other words as either belonging to samples 900 or to samples 905. If the inputted file is judged to be relevant, then an associative access retrieval can be performed and similar documents can be outputted to the user from the set of samples 900.

The method described in connection with the foregoing embodiment is a very powerful tool which can be used to reduce "associations" like the human brain. Based on an inputted query document there are produced output documents which are associations related to the input document in such a manner that they have a similar content than the input document. "Similar content" here is quite difficult to describe in more exact terms, another attempt could be to say that the documents found have aspects under which they may be regarded similar to the inputted query document. Those aspects to some extent depend on the way how the feature vector is produced based on the query document and the documents stored for the associative access. If the feature vectors are produced based on bigrams or trigrams, then the retrieved documents represent similarities in terms of consecutive syllabes. This necessarily also reflects some similarity in content, because similar words which occur in the query document and the stored documents result in similar or identical feature vectors.

However, depending on how the similarity measure is actually calculated, also other aspects of similarity may be taken into account, such as phonetic similarity which would be rather significant if phonemes are used to build the feature vectors rather than sequences of ASCI characters.

The present invention in its embodiments therefore is capable to perform true "associations", and this is a very powerful tool for any human being who is confronted with processing the flood of information he is encountering every day. For many or all of the pieces of information we encounter nowadays we have to carry out the task of performing associations, i.e. we have to recall or find similar documents/events/decisions/etc., in order to put the new information into the right framework in order to be able to process it in a suitable manner. The human brain is very good in performing these associations, however, it is very limited in the sense that its storage contains a limited set of sample documents. This limited set of samples is limited because only those samples are stored in the human brain which the user or the human being is able to read and to hear. However, the actual reading or hearing capability of a human being is almost nothing compared with the amount of information produced every day. It is therefore very helpful if a machine is capable of storing samples and then to retrieve from the thus stored samples those which can be regarded as an "association" to a given input sample. A user who is provided with a machine as explained in connection with Fig. 11 therefore is capable to access in an associative manner a huge sample of documents which he actually may have not seen, read, or heard at all, however, which are stored in a memory database 900 to allow an associative access as explained. If a user then is interested in a certain aspect of some piece of information, he may create his own input file 910 and then the machine will retrieve him those associations from the prestored "knowledge" which are most interesting for him.

According to another aspect a user may be confronted with a new input which he is unable to put into the right framework because he has no "knowledge" about it. In a similar manner, a user may then make use of the machine shown in Fig. 11 to retrieve samples from a repository or database 900 which can be regarded as "associations" of the unknown input document 910.

Such a process or machine as explained in connection with Fig. 11 is therefore of substantial assistance to any human being who is confronted with the flood of information which he encounters every day. It is helpful when performing associations to put unknown information into the right framework, in order to retrieve samples from a knowledge database which he otherwise would never find based on a self-created document, or in order to classify unclassified input data into one of a set of predefined classification classes.

Considering that a human being when processing information he is encountering does nothing else than performing associations and carrying out classifications, such a machine as explained in connection with Fig. 11 truly is capable of assisting the user with processing information and taking over much of the work which so far has to be done by a human being.

## Claims

1. A method for retrieving from a set of electronic documents those documents which are close in content to an electronic document used as an input document, said method comprising:
A) providing a set of documents (D1, ..., DN);
B) generating bit string feature vectors (110) for the documents of said set, wherein each feature vector represents a respective of said documents and indicates with each of its binary vector components the presence or absence of a certain feature within the respective document;
C) forming a bit attribute matrix (100; 800) from the bit string feature vectors (110), the bit attribute matrix consisting of individual bits and each bit representing a certain attribute for a certain document by indicating the presence or absence of a certain feature within the respective document;
D) providing an input document (200; 400; 700; 820);
E) generating a plurality of fragments (S1, S2, S3; 410, 420, 430, 440, 450, 460, 470, 480; 710, 720, 730) of said input document (200; 400; 700; 820) which are parts of said input document;
F) for each of said fragments, generating a respective query bit string feature vector (F1; F2; F3) representing the respective fragment and indicating with each of its binary vector components the presence or absence of a certain feature within the respective fragment;
G) effecting an associative search for each of said fragments using said bit attribute matrix and the respective query bit string feature vector (F1; F2; F3) representing the respective fragment,
wherein the associative search for a respective fragment is effected by determining for the fragment and each document of said set an individual similarity measure between said fragment and the respective document of said set,
wherein the respective individual similarity measure is determined by effecting a bit-wise logical operation between the query bit string feature vector representing the respective fragment and the bit string representing the respective document in said bit attribute matrix, wherein said individual similarity measures, each being determined for one particular fragment and one respective document of said set and representing a similarity between said one particular fragment and said one respective document of said set, are vector components of a similarity measure vector (SM1; SM2; SM3) associated to the respective particular fragment and all documents of said set of documents, wherein for each of said fragments a corresponding similarity measure vector (SM1; SM2; SM3) is obtained;
H) for each of said documents of said set calculating a respective individual final similarity measure from those individual similarity measures, which according to step G) are determined for the same respective document with respect to said fragments, said individual final similarity measures being vector components of a final similarity measure vector (FSM), which is obtained therewith on basis of said similarity measure vectors (SM1, SM2, SM3);
I) judging, on basis of said individual final similarity measures included as vector components in said final similarity measure vector (FSM), which documents of said set can be regarded as having a content close to said input document;
wherein said fragments (S1, S2, S3; 410, 420, 430, 440, 450, 460, 470, 480; 710, 720, 730) are generated by segmenting said input document (200; 400; 700; 820) into segments, wherein of said segments the first to second last segments have a given size and the last segment has the given size or is shorter than the given size,
wherein further input document fragments (450, 460, 470, 480; 720, 730) are generated by shifting one or more fragments of said input document to generate overlapping fragments (410, 420, 430, 440, 450, 460, 470, 480; 710, 720, 730) of said input document (400; 700), for which respective query bit string feature vectors are generated and used in said associative search.

2. The method of claim 1, wherein said overlap between said overlapping fragments is an overlap in units of one of:
characters;
syllables;
phonemes,
words.

3. The method of one of the preceding claims, wherein
said input document is obtained from performing a speech recognition process onto a text spoken by a human voice.

4. The method of one of the preceding claims, wherein each of said documents (D1, ..., DN) of said set is classified as belonging to one of a plurality of classes (810), said method further comprising:
performing said associative search,
based on the number of documents similar to the input document (820) which have been found in the individual classes, classifying said input document as belonging to one of said classes.

5. The method of claim 4, wherein
the number of classes is two, one for a relevant set of documents and one for a non-relevant set of documents;
returning retrieval results from said associative search to a user only if said input document has been classified as belonging to said relevant class.

6. The method of one of the preceding claims, further comprising:
optimizing the parameters of said method like fragment size and number of overlapping elements based on a given classification scheme, said optimizing comprising:
a) using documents from said classification scheme for which their classification is already known;
b) classifying them according to claim 6,
c) varying said parameters and repeating steps a) and b);
repeating step c) until an optimum set of parameters has been found.

7. The method of one of the preceding claims, wherein
voice input data is represented through phonems to provide said input document and said documents of said set, for which said bit string feature vectors are generated, contain phonem data;
or
written input data is used and said documents of said set, for which said bit string feature vectors are generated, contain written data in characters;
or
written input data is converted into phonem data to provide said input document and said documents of said set, for which said bit string feature vectors are generated, contain phonem data.

8. The method according to one of the preceding claims, wherein according to step H) the respective final similarity measure is calculated from said individual similarity measures using a weighting function which gives a higher weight to individual similarity measures indicating a higher similarity between the respective fragment and a respective document of said set and which gives a lower weight to individual similarity measures indicating a lower similarity between the respective fragment and a respective document of said set.

9. The method according to one of the preceding claims, wherein said bit-wise logical operation is a bit-wise logical AND operation.

10. The method according to claim 9, wherein the features present are represented by a logical "1" and the number of logical "1"s resulting from the bit-wise logical AND operation is used as individual similarity measure.

## Patentansprüche

1. Verfahren zum Abrufen aus einer Menge von elektronischen Dokumenten von denjenigen Dokumenten, welche inhaltlich einem elektronischen Dokument ähnlich sind, das als ein Eingabedokument verwendet wird,
wobei das Verfahren umfasst:
A) Bereitstellen einer Menge von Dokumenten (D1, ..., DN);
B) Erzeugen von Bitfolgen-Merkmalsvektoren (110) für die Dokumente der Menge, wobei jeder Merkmalsvektor ein jeweiliges von den Dokumenten darstellt und mit jeder von seinen binären Vektorkomponenten das Vorkommen oder das Fehlen eines bestimmten Merkmals innerhalb des jeweiligen Dokuments anzeigt;
C) Bilden einer Bit-Attributsmatrix (100; 800) aus den Bitfolgen-Merkmalsvektoren (110), wobei die Bit-Attributsmatrix aus einzelnen Bits besteht und jedes Bit ein bestimmtes Attribut für ein bestimmtes Dokument darstellt, indem es das Vorkommen oder das Fehlen eines bestimmten Merkmals innerhalb des jeweiligen Dokuments anzeigt;
D) Bereitstellen eines Eingabedokuments (200; 400; 700; 820);
E) Erzeugen einer Mehrzahl von Fragmenten (S1, S2, S3; 410, 420, 430, 440, 450, 460, 470, 480; 710, 720, 730) des Eingabedokuments (200; 400; 700; 820), welche Teile des Eingabedokuments sind;
F) Erzeugen, für jedes der Fragmente, eines jeweiligen Abfrage-Bitfolgen-Merkmalsvektors (F1; F2; F3), welcher das jeweilige Fragment darstellt und welcher mit jeder von seinen binären Vektorkomponenten das Vorkommen oder das Fehlen eines bestimmten Merkmals innerhalb des jeweiligen Fragments anzeigt;
G) Durchführen einer Assoziativsuche für jedes der Fragmente, unter Verwendung der Bit-Attributsmatrix und des jeweiligen Abfrage-Bitfolgen-Merkmalsvektors (F1; F2; F3), welcher das jeweilige Fragment darstellt,
wobei die Assoziativsuche für ein jeweiliges Fragment durchgeführt wird, indem für das Fragment und jedes Dokument der Menge ein individuelles Ähnlichkeitsmaß zwischen dem Fragment und dem jeweiligen Dokument der Menge bestimmt wird,
wobei das jeweilige individuelle Ähnlichkeitsmaß bestimmt wird, indem eine bitweise Logikoperation zwischen dem Abfrage-Bitfolgen-Merkmalsvektor, welcher das jeweilige Fragment darstellt, und der Bitfolge, welche das jeweilige Dokument in der Bit-Attributsmatrix darstellt, durchgeführt wird,
wobei die individuellen Ähnlichkeitsmaße, welche jeweils für ein bestimmtes Fragment und ein jeweiliges Dokument der Menge bestimmt werden und welche eine Ähnlichkeit zwischen dem einen bestimmten Fragment und dem einen jeweiligen Dokument der Menge darstellen, Vektorkomponenten eines Ähnlichkeitsmaßvektors (SM1; SM2; SM3) sind, welcher mit dem jeweiligen bestimmten Fragment und mit allen Dokumenten der Menge von Dokumenten assoziiert ist,
wobei für jedes der Fragmente ein entsprechender Ähnlichkeitsmaßvektor (SM1; SM2; SM3) erhalten wird;
H) Berechnen, für jedes der Dokumente der Menge, eines jeweiligen individuellen finalen Ähnlichkeitsmaßes aus denjenigen individuellen Ähnlichkeitsmaßen, welche gemäß Schritt G) für das gleiche jeweilige Dokument im Bezug auf die Fragmente bestimmt werden, wobei die individuellen finalen Ähnlichkeitsmaße Vektorkomponenten eines finalen Ähnlichkeitsmaßvektors (FSM) sind, welcher somit auf Grundlage der Ähnlichkeitsmaßvektoren (SM1, SM2, SM3) erhalten wird;
I) Beurteilen, auf Grundlage der individuellen finalen Ähnlichkeitsmaße, welche als Vektorkomponenten in dem finalen Ähnlichkeitsmaßvektor (FSM) enthalten sind, welche Dokumente der Menge als dem Eingabedokument inhaltlich ähnlich angesehen werden können;
wobei die Fragmente (S1, S2, S3; 410, 420, 430, 440, 450, 460, 470, 480; 710, 720, 730) durch Segmentieren des Eingabedokuments (200; 400; 700; 820) in Segmente erzeugt werden, wobei von den Segmenten, das erste Segment bis zum vorletzten Segment eine gegebene Größe aufweisen, und das letzte Segment die gegebene Größe aufweist oder kürzer als die gegebene Größe ist, wobei weitere Eingabedokumentfragmente (450, 460, 470, 480; 720, 730) durch Verschieben von einem oder mehreren Fragmenten des Eingabedokuments erzeugt werden, um überlappende Fragmente (410, 420, 430, 440, 450, 460, 470, 480; 710, 720, 730) des Eingabedokuments (400; 700) zu erzeugen, für welches jeweilige Abfrage-Bitfolgen-Merkmalsvektoren erzeugt und in der Assoziativsuche verwendet werden.

2. Verfahren nach Anspruch 1,
wobei die Überlappung zwischen den überlappenden Fragmenten, eine Überlappung in Einheiten von einem aus:
Zeichen;
Silben;
Phonemen;
Wörtern
ist.

3. Verfahren nach einem der vorhergehenden Ansprüche,
wobei das Eingabedokument durch Ausführen eines Spracherkennungsverfahrens an einem Text erhalten wird, welcher durch eine menschliche Stimme gesprochen wird.

4. Verfahren nach einem der vorhergehenden Ansprüche,
wobei jedes der Dokumente (D1, ..., DN) der Menge, als zu einer aus einer Mehrzahl von Klassen (810) gehörend klassifiziert wird, wobei das Verfahren ferner umfasst:
Ausführen der Assoziativsuche,
Klassifizieren des Eingabedokuments auf Grundlage der Anzahl von zum Eingabedokument (820) ähnlichen Dokumenten, welche in den individuellen Klassen gefunden worden sind, als zu einer der Klassen gehörend.

5. Verfahren nach Anspruch 4,
wobei die Anzahl von Klassen zwei ist, eine für eine relevante Menge von Dokumenten und eine für eine nicht-relevante Menge von Dokumenten;
wobei Abrufergebnisse der Assoziativsuche einem Benutzer nur dann zurück gegeben werden, wenn das Eingabedokument als zur relevanten Klasse zugehörig klassifiziert wurde.

6. Verfahren nach einem der vorhergehenden Ansprüche, ferner umfassend:
Optimieren der Parameter des Verfahrens, wie Fragmentgröße und Anzahl von überlappenden Elementen auf Grundlage eines gegebenen Klassifikationsschemas, wobei das Optimieren umfasst:
a) Verwenden von Dokumenten aus dem Klassifikationsschema, für welche deren Klassifikation bereits bekannt ist;
b) deren Klassifizieren gemäß Anspruch 6,
c) Variieren der Parameter und Wiederholen von Schritten a) und b);
Wiederholen von Schritt c) bis eine optimale Parametermenge gefunden wurde.

7. Verfahren nach einem der vorhergehenden Ansprüche,
wobei Spacheingabedaten durch Phoneme dargestellt werden, um das Eingabedokument bereitzustellen, und wobei die Dokumente der Menge, für welche die Bitfolgen-Merkmalsvektoren erzeugt werden, Phonemdaten enthalten;
oder
wobei schriftliche Eingabedaten verwendet werden, und wobei die Dokumente der Menge, für welche die Bitfolgen-Merkmalsvektoren erzeugt werden, schriftliche Daten in Zeichenform enthalten,
oder
wobei schriftliche Eingabedaten in Phonemdaten umgewandelt werden, um das Eingabedokument bereitzustellen, und wobei die Dokumente der Menge, für welche die Bitfolgen-Merkmalsvektoren erzeugt werden, Phonemdaten enthalten.

8. Verfahren nach einem der vorhergehenden Ansprüche,
wobei gemäß Schritt H) das jeweilige finale Ähnlichkeitsmaß aus den individuellen Ähnlichkeitsmaßen unter Verwendung einer Gewichtungsfunktion berechnet wird, die eine höhere Gewichtung individuellen Ähnlichkeitsmaßen zuordnet, welche eine höhere Ähnlichkeit zwischen dem jeweiligen Fragment und einem jeweiligen Dokument der Menge anzeigen, und die eine niedrigere Gewichtung individuellen Ähnlichkeitsmaßen zuordnet, welche eine niedrigere Ähnlichkeit zwischen dem jeweiligen Fragment und einem jeweiligen Dokument der Menge anzeigen.

9. Verfahren nach einem der vorhergehenden Ansprüche,
wobei die bitweise Logikoperation eine bitweise logische UND-Operation ist.

10. Verfahren nach Anspruch 9,
wobei die vorhandene Merkmale durch eine logische "1" dargestellt werden, und wobei die aus der bitweise logischen UND-Operation entstehende Anzahl von logischen "1 "-en als individuelles Ähnlichkeitsmaß verwendet wird.

## Revendications

1. Procédé pour récupérer à partir d'un ensemble de documents électroniques les documents dont le contenu est proche de celui d'un document électronique utilisé comme document d'entrée, ledit procédé comprenant les étapes suivantes:
a) prévoir un ensemble de documents (D1, ..., Dn);
b) générer des vecteurs caractéristiques de chaînes de bits (110) pour les documents dudit ensemble, dans lequel chaque vecteur caractéristique représente un document respectif desdits documents et indique avec chacun de ses composantes vectorielles binaires la présence ou l'absence d'une certaine caractéristique à l'intérieur du document respectif;
c) former une matrice d'attributs de bits (100; 800) à partir des vecteurs caractéristiques de chaînes de bits (110), la matrice d'attributs de bits état constituée de bits individuels, et chaque bit représentant un certain attribut pour un certain document en indiquant la présence ou l'absence d'une certaine caractéristique à l'intérieur du document respectif;
d) prévoir un document d'entrée (200; 400; 700; 820);
e) générer une pluralité de fragments (S1, S2, S3; 410, 420, 430, 440, 450, 460, 470, 480; 710, 720, 730) dudit document d'entrée (200; 400; 700; 820) qui constituent des parties dudit document d'entrée;
f) pour chacun desdits fragments, générer un vecteur caractéristique de chaînes de bits de requête respectif (F1; F2; F3) qui représente le fragment respectif et qui indique avec chacune des ses composantes vectorielles binaires la présence ou l'absence d'une certaine caractéristique à l'intérieur du fragment respectif;
g) effectuer une recherche associative pour chacun desdits fragments en utilisant ladite matrice d'attributs de bits et le vecteur caractéristique de chaînes de bits de requête respectif (F1; F2; F3) qui représente le fragment respectif,
dans lequel la recherche associative pour un fragment respectif est effectuée en déterminant pour le fragment et pour chaque document dudit ensemble une mesure de similarité individuelle entre ledit fragment et le document respectif dudit ensemble; dans lequel la mesure de similarité individuelle respective est déterminée en effectuant une opération logique de manipulation de bits entre le vecteur caractéristique de chaînes de bits de requête qui représente le fragment respectif et la chaîne de bits qui représente le document respectif dans ladite matrice d'attributs de bits,
dans lequel lesdites mesures de similarité individuelles, qui sont chacune déterminées pour un fragment particulier et un document respectif dudit ensemble et qui représentent une similarité entre ledit un fragment particulier et ledit un document respectif dudit ensemble, sont des composantes vectorielles d'un vecteur de mesure de similarité (SM1; SM2; SM3) qui est associé au fragment particulier respectif ainsi qu'à tous les documents dudit ensemble de documents;
dans lequel, pour chacun desdits fragments, un vecteur de mesure de similarité correspondant (SM1, SM2, SM3) est obtenu;
h) pour chacun desdits documents dudit ensemble, calculer une mesure de similarité finale individuelle respective à partir des mesures de similarité individuelles qui, selon l'étape g), sont déterminées pour le même document respectif par rapport auxdits fragments, lesdites mesures de similarité finales individuelles étant des composantes vectorielles d'un vecteur de mesure de similarité finale (FSM), qui est obtenu avec celles-ci sur la base desdits vecteurs de mesure de similarité (SM1, SM2, SM3);
i) juger, sur la base desdites mesures de similarité finales individuelles incluses comme composantes vectorielles dans ledit vecteur de mesure de similarité finale (FSM), quels sont les documents dudit ensemble qui peuvent être considérés comme possédant un contenu proche de celui dudit document d'entrée; dans lequel lesdits fragments (S1, S2, S3; 410, 420, 430, 440 450, 460, 470, 480; 710, 720, 730) sont générés en segmentant ledit document d'entrée (200; 400; 700; 820) en segments, dans lequel, parmi lesdits segments, le premier segment à l'avant-dernier segment présentent une taille donnée, et le dernier segment présente la taille donnée ou est plus court que la taille donnée;
dans lequel des fragments de document d'entrée supplémentaires (450, 460, 470, 480; 720, 730) sont générés en déplaçant un ou plusieurs fragment(s) dudit document d'entrée afin de générer des fragments chevauchants (410, 420, 430, 440, 450, 460, 470, 480; 710, 720, 730) dudit document d'entrée (400; 700), pour lesquels des vecteurs caractéristiques de chaînes de bits de requête sont générés et utilisés dans ladite recherche associative.

2. Procédé selon la revendication 1, dans lequel ledit chevauchement entre lesdits fragments chevauchants est un chevauchement en unités de l'un des éléments suivants: caractère, syllabes, phonèmes et mots.

3. Procédé selon l'une quelconque des revendications précédentes, dans lequel ledit document d'entrée est obtenu en exécutant un procédé de reconnaissance vocale sur un texte dit par une voix humaine.

4. Procédé selon l'une quelconque des revendications précédentes, dans lequel chacun desdits documents (D1, ..., Dn) dudit ensemble est classifié comme appartement à l'une d'une pluralité de classes (810), ledit procédé comprenant en outre les étapes suivantes:
exécuter ladite recherche associative sur la base du nombre de documents similaires au document d'entrée (820) qui ont été trouvés dans les classes individuelles, et
classifier ledit document d'entrée comme appartement à l'une desdites classes.

5. Procédé selon la revendication 4, dans lequel:
le nombre de classe est deux, une classe pour un ensemble pertinent de documents, et une classe pour un ensemble non pertinent de documents; et
les résultats de la récupération consécutifs à ladite recherche associative sont envoyés à un utilisateur uniquement si ledit document d'entrée a été classifié comme appartenant à ladite classe pertinente.

6. Procédé selon l'une quelconque des revendications précédentes, comprenant en outre les étapes suivantes:
optimiser les paramètres dudit procédé, tels que la taille de fragment et le nombre d'éléments chevauchants, sur la base d'un schéma de classification donné, ladite optimisation comprenant les étapes suivantes:
a) utiliser des documents issus dudit schéma de classification dont la classification est déjà connue;
b) classifier ceux-ci selon la revendication 6; et
c) modifier lesdits paramètres et répéter les étapes a) et b), et répéter l'étape c) jusqu'à ce qu'un ensemble optimum de paramètres ait été trouvé.

7. Procédé selon l'une quelconque des revendications précédentes, dans lequel:
des données d'entrée de voix sont représentées par l'intermédiaire de phonèmes pour former ledit document d'entrée, et lesdits documents dudit ensemble, pour lesquels lesdits vecteurs caractéristiques de chaînes de bits sont générés, contiennent des données de phonèmes; ou
des données d'entrée écrites sont utilisées, et lesdits documents dudit ensemble, pour lesquels lesdits vecteurs caractéristiques de chaînes de bits sont générés, contiennent des données écrites en utilisant des caractères; ou
des données d'entrée écrites sont converties en données de phonèmes pour former ledit document d'entrée, et lesdits documents dudit ensemble, pour lesquels lesdits vecteurs caractéristiques de chaînes de bits sont générés, contiennent des données de phonèmes.

8. Procédé selon l'une quelconque des revendications précédentes, dans lequel, selon l'étape h), la mesure de similarité finale respective est calculée à partir desdites mesures de similarité individuelles en utilisant une fonction de pondération qui confère un poids plus élevé à des mesures de similarité individuelles qui indiquent une plus grande similarité entre le fragment respectif et un document respectif dudit ensemble, et qui confère un poids moins élevé à des mesures de similarité individuelles qui indiquent une plus petite similarité entre le fragment respectif et un document respectif dudit ensemble.

9. Procédé selon l'une quelconque des revendications précédentes, dans lequel ladite opération logique de manipulation de bits est une opération ET logique de manipulation de bits.

10. Procédé selon la revendication 9, dans lequel les caractéristiques présentes sont représentées par une logique "1", et le nombre de logiques "1" qui résulte de l'opération ET logique de manipulation de bits est utilisé comme mesure de similarité individuelle.
